Europäisches Patentamt

European Patent Office

Office européen des brevets

(19)

(11) EP 1 598 964 A1

(12) **EUROPEAN PATENT APPLICATION**
published in accordance with Art. 158(3) EPC

(43) Date of publication:
23.11.2005 Bulletin 2005/47

(51) Int Cl.⁷: **H04B 13/00**, H04B 5/02

(21) Application number: 04715457.0

(22) Date of filing: 27.02.2004

(86) International application number:
**PCT/JP2004/002374**

(87) International publication number:
**WO 2004/077705 (10.09.2004 Gazette 2004/37)**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: 27.02.2003 JP 2003051868

(71) Applicant: **SONY CORPORATION**
**Tokyo 141-0001 (JP)**

(72) Inventor: **TAKIGUCHI, Kiyoaki, Sony Corporation Tokyo 141-0001 (JP)**

(74) Representative: **Körber, Martin Hans**
**Mitscherlich & Partner**
**Patentanwälte**
**Sonnenstrasse 33**
**80331 München (DE)**

(54) **COMMUNICATION SYSTEM, COMMUNICATION METHOD AND COMMUNICATION APPARATUS**

(57) The present invention makes it possible to enhance the degree of freedom in communication using a quasi-electrostatic field. According to the present invention, by causing a human body to act as an antenna to send and receive ID information D5 while avoiding 8 Hz peaks Px that appear with a high strength, in a walking quasi-electrostatic field HSE formed in the neighborhood of the human body in response to a walking motion of the human body, the ID information D5 can be sent and received via a quasi-electrostatic field DSE formed isotropically around the human body with the human body as an antenna while destruction of the information by the 8 Hz peaks PX is prevented. Thus the degree of freedom in communication using a quasi-electrostatic field can be enhanced.

3

10 ELECTRIC FIELD DETECTION PORTION
14 AMPLIFIER
20 SENDING PORTION
~D5
S1
22
S2
23
24
LPF
WAVEFORM PROCESSING PORTION
MODULATION CIRCUIT
15 CASE
11 FET
13 DIELECTRIC
D4
30 ELECTRIFICATION INDUCTION PORTION
HS
31 ELECTRIFICATION INDUCTION ELECTRODE
32 DIELECTRIC
OS USER'S EPIDERMIS
12 DETECTION ELECTRODE

FIG. 6

EP 1 598 964 A1

**Description**

Technical Field

The present invention relates to a communication system and is preferably applicable to a communication system for sending and receiving information via an electric field, for example.

Background Art

Conventionally, communication systems have been adapted to send and receive information using a radiation field (radio waves), for example, between mobile telephones, and send and receive information via electromagnetic induction, for example, between the coil in a data reader/writer provided on a ticket checking and collecting machine at a station and the coil in an IC card.

Recently, there have been proposed communication systems which are provided with a human-body-side communication device fitted in contact with the skin of a human body and an equipment-side communication device in the neighborhood of the user as shown in Table 1 below. In these communication systems, an alternating voltage is applied to the human body via the electrode of the human-body-side communication device, and as a result, there is caused an electrostatic induction phenomenon at the electrode of the equipment-side communication device by the action of a capacitor using a human body intervening between the electrodes of the communication device on the human body side and the communication device on the equipment side as a medium. Using the electrostatic induction phenomenon, information is sent and received (see Non-patent document 1, for example).

EP 1 598 964 A1

At least two leads (a signal line and a reference line) are required for performing wired communication between equipment A and B.

Equipment A — Signal line — Equipment B
Reference line

How should the two lines arranged when a human body is utilized as a lead?

A human body is one lead

| | Our company's method | Company A's method | Company B's method |
|---|---|---|---|
| Basic principle | Communication device on the humanbody side / Communication device on the equipment side / Static coupling | Communication device on the humanbody side / Communication device on the equipment side / Static coupling | Communication device on the humanbody side / Static coupling / Communication device on the equipment side |
| | Signal line: Utilizes the human body. Reference line: Utilizes the human body and static coupling between the human body and the ground | Signal line: Utilizes the human body. Reference line: Utilizes static coupling between the electrode of the communication device on the human body side and the ground | Signal line: Utilizes the human body. Reference line: Utilizes static coupling between the electrodes of the communication device on the human body side and the communication device on the equipment side |
| Characteristics | ○:Stable because the distance during which unstable static coupling is utilized is short. External noises influence little. ○:The electrode area can be reduced and miniaturization is possible. △:The way of mounting is restricted (directional restriction). | ×:Unstable because the distance during which static coupling is utilized is long. Easily influenced by external noises. △:A large electrode area is required. Miniaturization is difficult. ○:The degree of freedom in mounting is high. | ×:Unstable because the strength of static coupling varies according to use conditions. △:The distance between the communication device on the human body side and the communication device on the equipment side can not be lengthened. |

Legend: □ : Signal electrode  ▭ : Reference electrode  — : Signal line  --- : Reference line

In addition to the communication systems shown in Table 1, there have been proposed a lot of communication systems adapted to send and receive information utilizing the electrostatic induction phenomenon caused at a receiving electrode by the action of a capacitor using a human body intervening between sending and receiving electrodes as a medium (see Patent documents 1 to 9 and Non-patent documents 2 to 5).

[Patent document 1] National Publication of International Patent Application No. 11-509380
[Patent document 2] Patent No. 3074644
[Patent document 3] Japanese Patent Laid-Open No. 10-228524
[Patent document 4] Japanese Patent Laid-Open No. 10-229357
[Patent document 5] Japanese Patent Laid-Open No. 2001-308803
[Patent document 6] Japanese Patent Laid-Open No. 2000-224083
[Patent document 7] Japanese Patent Laid-Open No. 2001-223649
[Patent document 8] Japanese Patent Laid-Open No. 2001-308803
[Patent document 9] Japanese Patent Laid-Open No. 2002-9710
[Non-patent document 1] Internet
<URL:http://www.mew.co.jp/press/0103/0103-7.htm> (retrieved on January 20, 2003)
[Non-patent document 2] "Development of Information Communication Device with Human Body Used as Transmission Line" by Keisuke Hachisuka, Anri Nakata, Kenji Shiba, Ken Sasaki, Hiroshi Hosaka and Kiyoshi Itao (Tokyo University); March 1, 2002 (Collected Papers for Academic Lectures on Micromechatronics, Vol., 2002, Spring, pp. 27-28)
[Non-patent document 3] "Development of Communication System within Organism" by Anri Nakata; Keisuke Hachisuka, Kenji Shiba, Ken Sasaki, Hiroshi Hosaka and Kiyoshi Itao (Tokyo University); 2002 (Collected Papers for Academic Lectures for Japan Society of Precision Engineering Conference, Spring, p.640)
[Non-patent document 4] "Review on Modeling of Communication System Utilizing Human Body as Transmission Line" by Katsuyuki Fujii (Chiba University), Koichi Date (Chiba University), Shigeru Tajima (Sony Computer Science Laboratories, Inc.); March 1, 2002 (Technical Reports by The Institute of Image Information and Television Engineers Vol. 26, No. 20, pp. 13-18)
[Non-patent document 5] "Development of Information Communication Device with Human Body Used as Transmission Line" by Keisuke Hachisuka, Anri Nakata, Kento Takeda, Ken Sasaki, Hiroshi Hosaka, Kiyoshi Itao (Graduate School of Science of New Region Creation, Tokyo University) and Kenji Shiba (Science and Engineering Course, Tokyo University of Science); March 18, 2002 (Micromechatronics Vol. 46; No. 2; pp. 53-64)

In these communication systems with such a configuration, since the action of a capacitor using a human body intervening between sending and receiving electrodes as a medium is the premise of physical action, the communication strength in communication between the electrodes depends on the area of the electrodes.

Furthermore, since the action of a capacitor using a human body intervening between sending and receiving electrodes as a medium is the premise of physical action, it is physically impossible, when the sending electrode is fitted to the human's right wrist, for example, to communicate in directions other than the direction from the human's right wrist to the fingertip. When the sending electrode is fitted near the human's chest, communication in directions other than the forward direction from the human's chest is physically impossible.

As described above, in communication systems, since the action of a capacitor using a human body intervening between sending and receiving electrodes as a medium is the premise of physical action, there have been a problem that the communication direction is restricted by the position of the electrode fitted to a human body as well as a problem that the degree of freedom in communication is low because the communication strength depends on the electrode area.

Disclosure of the Invention

The present invention has been made in consideration of the above problems and proposes a communication system, a communication method and a communication device capable of enhancing the degree of freedom in communication.

In order to solve the above problems, according to the present invention, in a communication system comprising a first communication device and a second communication device for sending and receiving information via a quasi-electrostatic field, the first and second communication devices detect an amplitude peak that appears at a predetermined frequency band in the displacement of a quasi-electrostatic field formed in the neighborhood of a human body in response to a bipedal motion of the human body passing through a predetermined communication route and determine a communication frame based on the detected amplitude peak. After that, the first communication device modulates the quasi-electrostatic field according to information only during the determined communication frame, while the second device demodulates the modulated quasi-electrostatic field only during the communication frame.

In this case, in the communication system, since the human body is electrified in a condition that amplitude peaks that appear with a high strength in the walking quasi-electrostatic field formed in the neighborhood of the human body in response to the human body's walking motion are avoided, it is possible to send and receive information by electrifying the human body according to predetermined information and thereby causing the human body to act as an antenna in the quasi-electrostatic field formed isotropically around the surface of the human body while preventing destruction of the information by such peaks.

Brief Description of the Drawings

Figure 1 is a schematic diagram provided to explain a polar coordinate system;
Figure 2 is a graph showing relative strength change (1) of each electric field relative to the distance;
Figure 3 is a graph showing relative strength change (2) of each electric field relative to the distance;
Figure 4 is a graph showing the relation between wavelength and distance in the vacuum;
Figure 5 shows the entire configuration of a communication system to which the present invention is applied;
Figure 6 is a schematic block diagram showing the configuration of a card device;
Figure 7 is a block diagram showing the configuration of a waveform processing portion;
Figure 8 is a schematic diagram provided to explain a walking waveform;
Figure 9 is a flowchart showing a procedure for sending process;
Figure 10 is a schematic block diagram showing the configuration of an authentication device;
Figure 11 is a flowchart showing a procedure for an authentication process;
Figure 12 is a schematic diagram provided to explain the floor surface of the authentication device;
Figure 13 is a schematic diagram showing the equipotential surface of a quasi-electrostatic field to be formed when a human body is caused to act as an ideal dipole antenna;
Figure 14 is a schematic diagram showing the equipotential surface of a quasi-electrostatic field according to this embodiment;
Figure 15 is a schematic diagram provided to explain prevention of electrical leakage; and
Figure 16 is a schematic diagram showing the configuration of a noise absorption/grounding line.

Best Mode for Carrying Out the Invention

The present invention is now described in detail with reference to the drawings.

(1) Summary of the invention

According to the invention, information is sent and received using an electric field. The summary of the present invention is now described in terms of the relation with the electric field.

(1-1) Electric field

Generally, when current flows through an electric dipole (dipole antenna), the electric field E generated according to the distance r from the antenna can be represented in a simplified formula as shown below:

$$E_0 = A\left(\frac{1}{r^3} + \frac{jk}{r^2} + \frac{k^2}{r^1}\right)$$

$$\cdots\cdots(1)$$

where j is an imaginary unit, A a constant, and k is the number of waves.
As shown in the above formula (1), the electric field E can be roughly separated into a component which is in inverse proportion to the distance r raised to the third power (hereinafter, this component is referred to as a quasi-electrostatic field), a component which is in inverse proportion to the distance r raised to the second power (hereinafter, this component is referred to as an induction field) and a component which is linearly in inverse proportion to the distance r (hereinafter, this component is referred to as a radiation field).

The radiation field is a component excellent in propagation capability, which does not rapidly attenuate even when the distance r is long, since it is only linearly in inverse proportion to the distance r, and therefore, it has been used as a common information transmission medium in the art of information communication.

Though the induction field is a component with little transmission capability, which attenuates in inverse proportion to the distance r raised to the second power as the distance r lengthens, it has recently been used as an information transmission medium in a part of the art of information of communication.

The quasi-electrostatic field is a component which rapidly attenuates in inverse proportion to the distance r raised to the third power and therefore does not a transmission capability and which appears in close proximity to an oscillation source only as oscillation. Therefore, it has not been utilized in the art of information communication where the radiation field and the induction field are premises.

The present invention is adapted to send and receive information within a neighbor communication range, with a neighbor communication (hereinafter referred to as near field communication) approach using a quasi-electrostatic field among electric fields.

(1-2) Quasi-electrostatic field

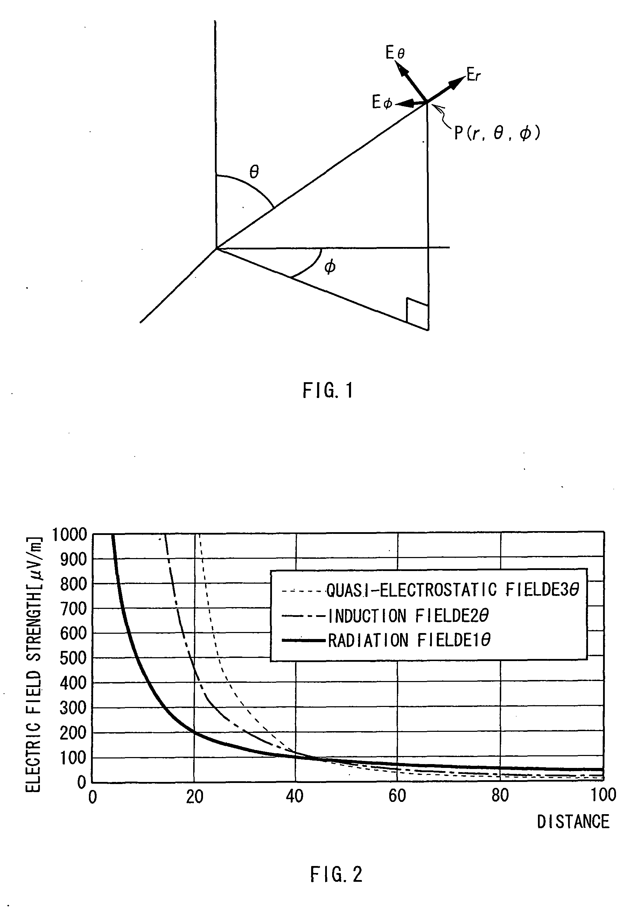

The quasi-electrostatic field is now described in more detail. First, the electric field E shown in the above formula (1) is represented as an electric field at a position P (r, θ, ϕ) at a predetermined distance from the origin as described in Figure 1.

In this case, if it is assumed that a charge q and a charge -q exist separated by a distance δ and the charge q changes to "Qcosωt" at a time t, then the electric fields Er, Eθ and Eϕ at the position P (r, θ, ϕ) can be represented as the following formulas, respectively, with the position of the charge q as the origin:

$$E_r = \frac{Qcos\omega t\sigma cos\theta}{2\pi\varepsilon r^3} (1+ jkr)exp(-jkr)$$

$$E_\theta = \frac{Qcos\omega t\sigma sin\theta}{4\pi\varepsilon r^3} (1+ jkr +(jkr)^2) \, exp(-jkr)$$

$$E_\phi = 0 \qquad\qquad (2)$$

In the formulas (2), the electric field Eϕ is "zero", and this means that there is not generated any electric field in the ϕ direction from the position P (Figure 1).

If the component which is linearly in inverse proportion to the distance r (that is, the radiation field) is separated from the electric fields Er and Eθ represented in the formulas (2), then the radiation field E1r and E1θ at the position P (r, θ, ϕ) are represented as the following formulas:

$$E_{1r} = 0$$

$$E_{1\theta} = \frac{Qcos\omega t\sigma sin\theta}{4\pi\varepsilon r} (jk)^2 exp(-jkr)$$

If the component which is in inverse proportion to the distance r raised to the second power (that is, the induction field) is separated from the electric fields Er and Eθ represented in the formulas (2), then the induction fields E2r and E2θ at the position P (r, θ, ϕ) are represented as the following formulas:

$$E_{2r} = \frac{Qcos\omega t\sigma cos\theta}{2\pi\varepsilon r^2} jk\cdot exp(-jkr)$$

$$E_{2\theta} = \frac{Qcos\omega t\sigma sin\theta}{4\pi\varepsilon r^2} jk\cdot exp(-jkr) \qquad (4)$$

Furthermore, if the component which is in inverse proportion to the distance r raised to the third power (that is, the quasi-electrostatic field) is separated from the electric fields Er and Eθ represented in the formulas (2), then the quasi-electrostatic fields E3r and E3θ at the position P (r, θ, ϕ) are represented as the following formulas:

$$E_{3r} = \frac{Q\cos\omega t\sigma\cos\theta}{2\pi\varepsilon r^3}$$

$$E_{3\theta} = \frac{Q\cos\omega t\sigma\sin\theta}{4\pi\varepsilon r^3} \tag{5}$$

In the formulas (3), only the radiation field E1r is "zero", and this means that there is not generated any radiation field in the tangent direction from the position P (Figure 1).

Now, in order to show the component's electric field strength of each of the radiation field, the induction field and the quasi-electrostatic field at a distance r, the radiation field E1θ, the induction field E2θ and the quasi-electrostatic field E3θ in the formulas (3) to (5) are now described in more detail.

The number of waves k [m$^{-1}$] is in the relation shown as the following formula, where the angular frequency is denoted by $\omega$ and the light velocity is denoted by c:

$$k = \frac{\omega}{c} \tag{6}$$

If the number of waves k is substituted into the formula (6), the "j·exp(-jkr)" is removed since it is beyond the discussion here, and the "cos$\omega$t" is assumed to be one (1) since the maximum change with time between the charge q and the charge -q is to be considered, then the following formulas are obtained: Radiation field

$$E_{1\theta} = \frac{Q\sigma\sin\theta}{4\pi\varepsilon r^3}\left[\frac{\omega}{c}r\right]^2$$

Induction field

$$E_{2\theta} = \frac{Q\sigma\sin\theta}{4\pi\varepsilon r^3}\frac{\omega}{c}r$$

Quasi-elctrostatic field

$$E_{3\theta} = \frac{Q\sigma\sin\theta}{4\pi\varepsilon r^3} \tag{7}$$

If the formulas (7) are rearranged by substituting the distance $\delta$, the charge q (= Q) and the θ with one (1), 0.001 [C] and $\pi$/2, respectively, then the following formulas are obtained: Radiation field

$$E_{1\theta} = \frac{0.001}{4\pi\varepsilon_0 r}\left[\frac{\omega}{c}\right]^2$$

Induction field

$$E_{2\theta} = \frac{0.001}{4\pi\varepsilon_0 r^2}\frac{\omega}{c}$$

Quasi-elctrostatic field

$$E_{3\theta} = \frac{0.001}{4\pi\varepsilon_0 r^3} \tag{8}$$

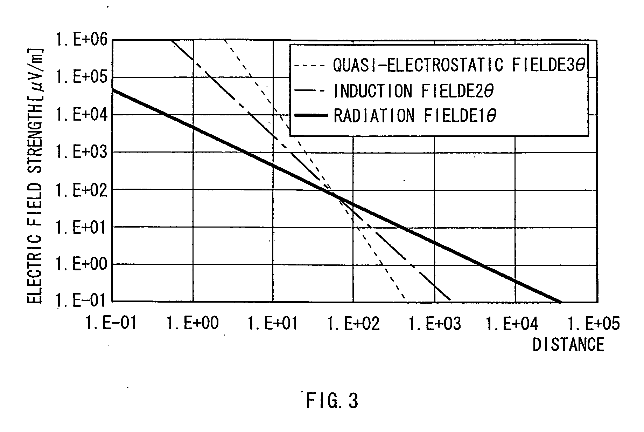

Figures 2 and 3 shows the results obtained by qualitatively plotting the component's electric field strengths of the radiation field E1θ, the induction field E2θ and the quasi-electrostatic field E3θ based on the formulas (8).

However, in Figures 2 and 3, the component's electric field strengths at a frequency of 1 [MHz] are shown, and in Figure 3, a relation between component's distance and electric field strength shown in Figure 2 is shown by a graph with a measure of logarithm.

Especially apparent from Figure 3, the component electric field strengths of the radiation field E1θ, the induction field E2θ and the quasi-electrostatic field E3θ are equal at a certain distance r (hereinafter referred to as a boundary point), and the radiation field E1θ is dominant in the distance from the boundary point. On the contrary, in the neighbor before the boundary point, the quasi-electrostatic field E3θ is dominant.

At the boundary point, the following formula is established according to the above formulas (8):

$$\frac{\omega}{c} \cdot r = 1 \qquad (9)$$

The light velocity c is in the relation shown by the following formula, where the wavelength is denoted by λ and the frequency is denoted by f:

$$c = \lambda \cdot f \qquad (10)$$

The angular frequency ω is in the relation shown by the following formula:

$$\omega = 2\,\pi\,f \qquad (11)$$

Then, by substituting the formula (10) and the formula (11) into the formula (9) and rearranging the formula (9), the following formula is obtained:

$$r = \frac{\lambda}{2\pi} \qquad (12)$$

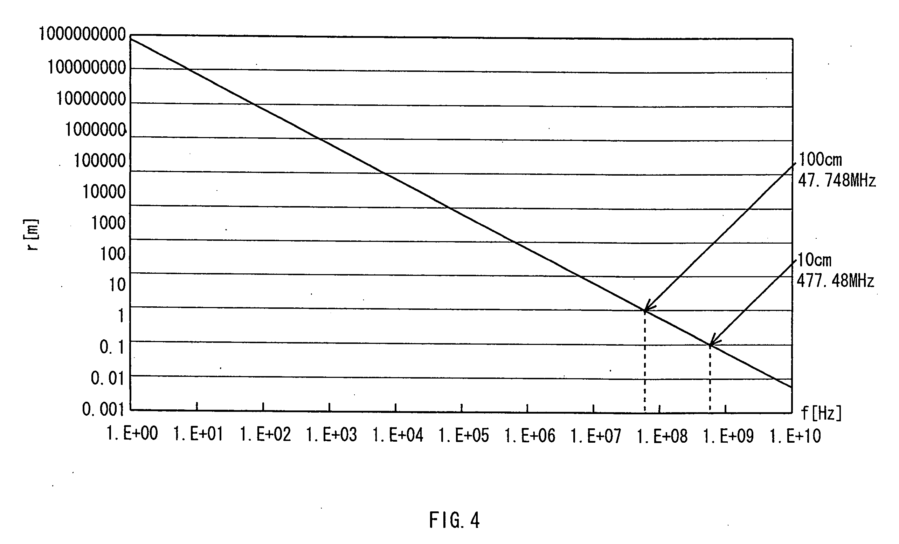

According to the formula (12), the distance r from the origin to the boundary point varies according to the wavelength λ. As shown in Figure 4, the longer the wavelength λ is, the wider the range (the distance r from the origin to the boundary point) where the quasi-electrostatic field E3θ is dominant.

To sum up the above description, the quasi-electrostatic field E3θ is dominant within the range where the distance r from the origin is "r<λ/2π", if the relative permittivity of the air ε is assumed to be 1 and the wavelength in the air is assumed to be λ.

In the present invention, by selecting the range satisfying the formula (12) when sending and receiving information with the near field communication approach, the information is sent and received in the space where the quasi-electrostatic field E3θ is dominant.

(1-3) A quasi-electrostatic field and a human body

Though it is necessary to apply current to a human body to cause the human body to generate a radiation field or an induction field, it is physically difficult to efficiently apply current to the human body because the impedance of a human body is very high. It is also physiologically undesirable to apply current to a human body. As for static electricity, however, the situation is completely different.

That is, a human body is very often electrified as suggested by the empirical fact that static electricity is felt in our everyday life. As it is known that a quasi-electrostatic field is generated by electrification of the surface of a human body in response to the movement of the human body, it is not necessary to apply electricity to a human body to cause the human body to generate a quasi-electrostatic field but it is only necessary to electrify the human body.

That is, a human body is electrified by extremely little movement of charge (current); the electrification change is instantaneously conducted around the surface of the human body; and then an equipotential surface of a quasi-electrostatic field is formed substantially isotropically from the periphery. Furthermore, within the range satisfying the above formula (12) where the quasi-electrostatic field is dominant, the radiation field and the induction field does not have much influence. Consequently, the human body functions efficiently as an antenna. This has already been confirmed from the results of the experiments by the applicant.

As a near field communication technology, the present information is adapted to modulate a quasi-electrostatic field which is isotropically formed in the neighborhood of a human body by electrifying the human body according to particular information, and as a result, form a quasi-electrostatic field having information in the neighborhood of the human body, through which the information is sent and received.

(1-4) A quasi-electrostatic field and a walking motion of a human body

As already stated, the surface of a human body is electrified in response to a movement of the human body. Description will be now made on the relation between walking, one of major movements of a human body, and electrification in more detail. Such relation is already disclosed in Japanese Patent Application No. 2002-314920 by the applicant.

That is, as for displacement of the strength of a quasi-electrostatic field formed as the surface of a human body is electrified by the human body's walking motion (hereinafter, it is referred to as a walking quasi-electrostatic field), not only transfer of a charge between the passage surface and the plantar surface but also change in the exfoliation area (or the contact area) of the plantar surface relative to the passage surface and change in the distance between the passage surface and the plantar surface are closely involved.

In other words, the electrification change on the surface of a human body caused by a walking motion of the human body reflects a pattern specific to the individual, which is generated by change in the electrostatic capacity and charge between the feet and the passage surface according to the track of the feet made by the walking motion and in which mutual movements of the right and left feet are combined.

At the instant when the tiptoe of the right foot (left foot) has completely left the ground, the left foot (right foot) is completely in contact with the passage surface, irrespective of difference in the walking condition, according to walking characteristics.

Accordingly, in such a condition, mutual electrification action (interference action) between the right and left feet does not occur, and in displacement of strength of the walking quasi-electrostatic field in this condition, the highest peak amplitude appears specifically within the band of 8 Hz±2 Hz.

As for details of the amplitude peak which appears in a walking quasi-electrostatic field (hereinafter referred to as the 8 Hz peak), see Japanese Patent Application No. 2002-314920 (paragraph No. [0024] on p. 5 to paragraph No. [0056] on p.12) already disclosed by the applicant. The walking motion described in the invention means a movement of walking on a flat passage surface without being especially conscious of the speed.

As described above, the 8 Hz peak with the highest strength appears in a walking quasi-electrostatic field formed in the neighborhood of a human body when a walking motion is performed, therefore, if attempting to electrify a human body to form a quasi-electrostatic field having information in the neighborhood of a the human body, for the purpose of performing near field communication, the information may be destroyed by the 8 Hz peak.

Therefore, the present invention is adapted to avoid destruction of information by the 8 Hz peak by electrifying a human body according to information while avoiding the timing when such 8 Hz peak appears. One embodiment to which the present invention is applied will be now described below.

(2) One embodiment of the present invention

(2-1) Entire configuration of a communication system

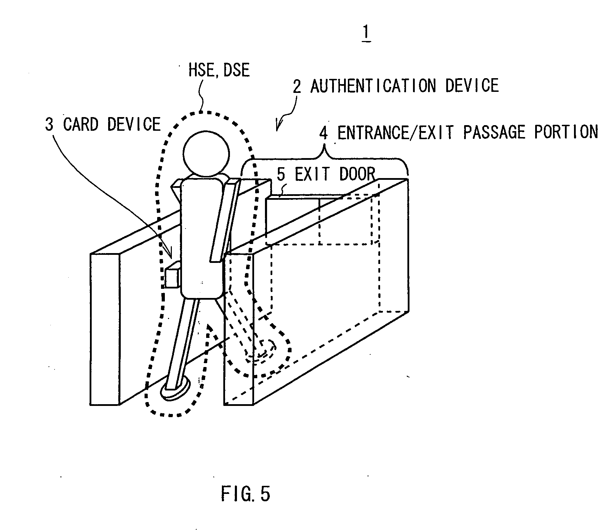

In Figure 5, reference numeral 1 denotes the entire configuration of a communication system to which the present invention is applied. The communication system comprises an authentication device 2 provided, for example, at the entrance of a company, and a mobile device (hereinafter referred to as a card device ) 3 detachably attached to a predetermined position of the arm of a human body (hereinafter referred to as a user) that utilizes the company in contact therewith.

The authentication device 2 comprises an entrance/exit passage portion 4 provided for entrance and exit, and an exit door 5 openably and closably provided on the exit side of the entrance/exit passage portion 4, and is adapted to perform near field communication with the card device 3 provided on the user who is passing through the entrance/exit passage portion 4 and open the exit door 5 which is closed, as necessary.

(2-2) Configuration of a card device

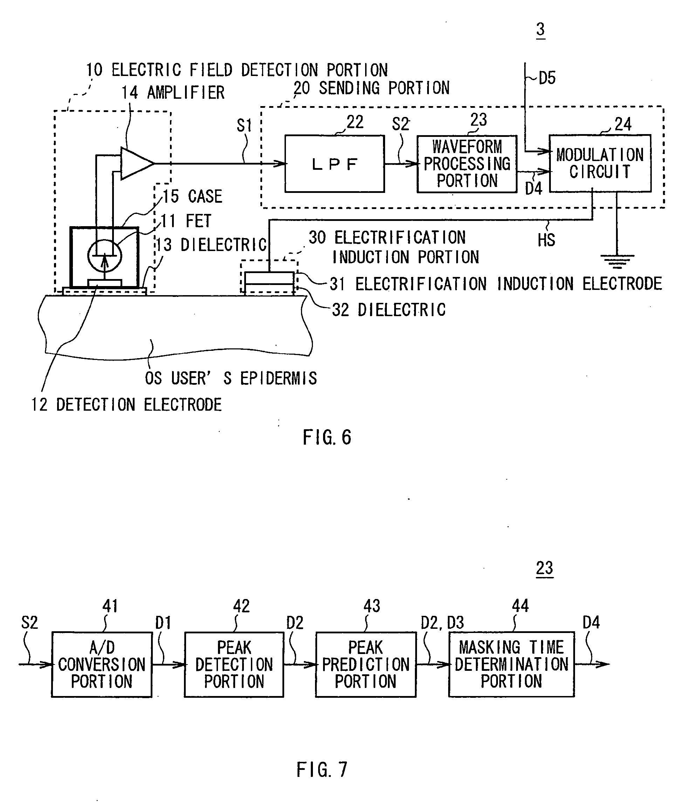

As shown in Figure 6, the card device 3 comprises an electric field detection portion 10, a sending portion 20 and an electrification induction portion 30.

The electric field detection portion 10 has a field effect transistor (hereinafter referred to as an FET) 11, and the gate of the FET 11 is connected to the user's epidermis OS, which is a detection target, via an detection electrode 12 and a dielectric 13 sequentially. The source and the drain of the FET 11 are connected to an amplifier 14.

The electric field detection portion 10 is adapted to detect strength change of a walking quasi-electrostatic field HSE (Figure 5) formed in the neighborhood of a user, which is caused by electrification of the surface of the user coming near to the entrance/exit passage portion 4, via the dielectric 13 and the detection electrode 12 sequentially, and send it to the sending portion 20 as an amplified walking electrification change signal S1 via the amplifier 14.

In this case, since strength change of the walking quasi-electrostatic field HSE formed in response to a walking motion of a user appears at an infrasonic frequency band, the electric field detection portion 10 is able to accurately detect the strength change substantially without being influenced by noises such as hum noises.

The electric field detection portion 10 contacts the dielectric 13 directly with the user's epidermis OS and thereby can detect the strength change of the walking quasi-electrostatic field HSE with high sensitivity. Furthermore, by forming the dielectric 13 with soft vinyl chloride with a high permittivity, for example, the strength change can be detected with more sensitivity.

In addition to the above configuration, the electric field detection portion 10 is provided with a conductive case 15 surrounding the periphery of the FET 11 in condition that the conductive case 15 is electrically separated from the FET 11, and thereby detection of strength change other than that in the walking quasi-electrostatic field HSE of the user can be avoided to the utmost extent.

The walking motion described in this embodiment means a movement of walking on a flat passage surface without being especially conscious of the speed.

The sending portion 20 comprises a low-pass filter (hereinafter referred to as an LPF) 22, a waveform processing portion 23 and a modulation circuit 24 and inputs an amplified walking electrification change signal S1 supplied by the electric field detection portion 10 into the LPF 22.

The LPF 22 abstracts a component with a low frequency at 20 Hz or below, for example, from the amplified walking electrification change signal S1 supplied by the amplifier 14 and sends it to the waveform processing portion 23 as a walking electrification change signal S2.

As shown in Figure 7, the waveform processing portion 23 comprises an A/D (Analog/Digital) conversion portion 41, a peak detection portion 42, a peak prediction portion 43, and a masking time determination portion 44. The waveform processing portion 23 digitalizes the walking electrification change signal S2 supplied by the LPF 22 with the A/D conversion portion 41 and sends resultant walking electrification change data D1 to the peak detection portion 42.

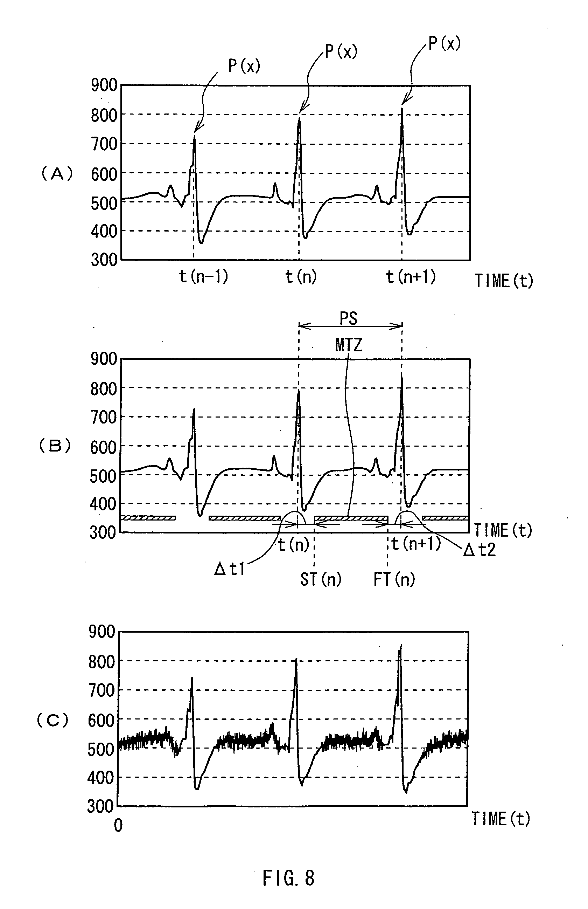

As shown in Figure 8 (A), the peak detection portion 42 monitors the band of 8 Hz±2 Hz in the electrification change waveforms in the walking electrification change data D1 supplied by the A/D conversion portion 41 and detects an 8 Hz peak Px which appears in this band.

Then, the peak detection portion 42 generates the time when the 8 Hz peak Px has been detected (hereinafter referred to as a current time) t(n) based on the clock in the card device 3 as current time data D2 and sends it to the peak prediction portion 43.

The peak prediction portion 43 holds the time (hereinafter the time is called as a past time) t(n-1) of a past 8 Hz peak Px stored in an internal memory, which had appeared immediately before the 8 Hz peak Px which appeared at the current time t(n), and predicts, based on the current time t(n) and the past time t(n-1), the time (hereinafter referred to as a future time) t(n+1) of a future 8 Hz peak Px which will appear immediately after the 8 Hz peak Px which appeared at the current time by adding the difference between the current time t(n) and the past time t(n-1) to the current time t(n) as represented by the following formula:

$$t(n + 1) = t(n) + (t(n) - t(n - 1)) \tag{13}$$

The peak prediction portion 43 generates the future time t(n+1) as predicted time data D3 and sends the predicted time data D3 and the current time data D2 to the masking time determination portion 44.

As shown in Figure 8 (B), the masking time determination portion 44 determines the time zone (hereinafter referred to as a masking time zone) MTZ to be modulated by the modulation circuit 24 (Figure 6) on the subsequent stage by calculating a start time ST(n) and a finish time FT(n) of the masking time zone MTZ.

Specifically, the masking time determination portion 44 presets in advance a period (hereinafter referred to as a predicted peak decreasing period) $\Delta t1$ which begins when the 8 Hz peak Px appears and ends when a predetermined amplitude level is reached, and calculates the start time ST(n) of the masking time zone MTZ in accordance with the following formula:

$$ST(n) = t(n) + \Delta t1 \tag{14}$$

The masking time determination portion 44 also presets in advance a period (hereinafter referred to as a predicted peak increasing period) $\Delta t2$ which begins at a predetermined amplitude level and ends when the 8 Hz peak Px appears, and calculates the finish time FT(n) of the masking time zone MTZ in accordance with the following formula:

$$FT(n) = t(n+1) - \Delta t2 \tag{15}$$

In this way, by removing the predicted peak decreasing period Δt1 and the predicted peak increasing period Δt2 preset in advance from the interval (hereinafter referred to as an 8 Hz peak interval) PS between an 8 Hz peak Px and the 8 Hz peak Px which appears immediately after the 8 Hz peak Px), the masking time determination portion 44 determines the masking time zone MTZ, in which the 8 Hz peak Px is avoided, and sends it to the modulation circuit 24 (Figure 6) as masking time data D4.

The modulation circuit 24 performs modulation processing on ID (IDentifier) information D5 of the card device 3 supplied from a memory (not shown) in the card device 3 in which the ID information D5 is stored in advance, with a predetermined modulation method, to generate a modulated signal HS with a high frequency, and applies the modulated signal HS to an electrification-induction electrode 31 only during the masking time zone MTZ in the masking time data D4 supplied by the masking time determination portion 44.

The electrification-induction electrode 31 oscillates according to the frequency of the modulated signal HS supplied by the modulation circuit 24 only during the masking time zone MTZ, and a quasi-electrostatic field (modulated signal HS) is generated from the electrification-induction electrode 31 according to the oscillation.

Such quasi-electrostatic field (modulated signal HS) causes the user to be electrified only during the masking time zone MTZ according to the oscillation (modulated signal HS) of the electrification-induction electrode 31 and thereby act as an antenna, and as shown in Figure 8(C), a quasi-electrostatic field according to the oscillation (hereinafter referred to as an information-transmission quasi-electrostatic field) DSE (Figure 5) isotropically spreads around the surface of the user.

As described above, in the sending portion 20, by changing the electrification condition of a user, the user is caused to act as an antenna, and as the result, an information-transmission quasi-electrostatic field DSE is formed on which the ID information D5 is superimposed.

In this case, in the sending portion 20, the user is electrified during the masking time zone MTZ (Figure 8), in which the 8 Hz peak Px which appears with the highest strength in the strength change in the walking quasi-electrostatic field HSE is avoided, so that the ID information D5 superimposed on the information-transmission quasi-electrostatic field DSE can be prevented from being destroyed by the 8 Hz peak Px.

If the relative permittivity of the air ε is represented by 1, the wavelength in the air is represented by λ, the maximum distance for communication between the card device 3 and the authentication device 2 is represented by r, and the frequency of the modulated signal HS to be supplied to the electrification-induction electrode 31 is represented by f, then the sending portion 20 is able to propagate, from the electrification-induction electrode 31 to the user, a quasi-electrostatic field oscillating in accordance with the frequency f which satisfies the following formula:

$$f < \frac{c}{2\pi \cdot r} \tag{16}$$

which is obtained by substituting the formula (10) into the formula (12) described above and rearranging the resultant formula.

Accordingly, when performing near field communication by causing a user who is passing through the entrance/exit passage portion 4 to act as an antenna, the sending portion 20 is able to form the communication space as space (substantially closed space) where a non-propagating information-transmission quasi-electrostatic field DSE (Figure 5) is always dominant, as described above with reference to Figures 3 and 4, and as a result, the communication output can be weakened to the extent that the communication contents are not propagated outside the communication space, and therefore, confidentiality of the communication contents can be secured more sufficiently.

The sending portion 20 is actually adapted to perform a sending process at the LPF 22, the waveform processing portion 23 and the modulation circuit 24 as software, in accordance with a predetermined sending program, under the control of a control portion not shown. The procedure for the sending process will be now described using the flowchart below.

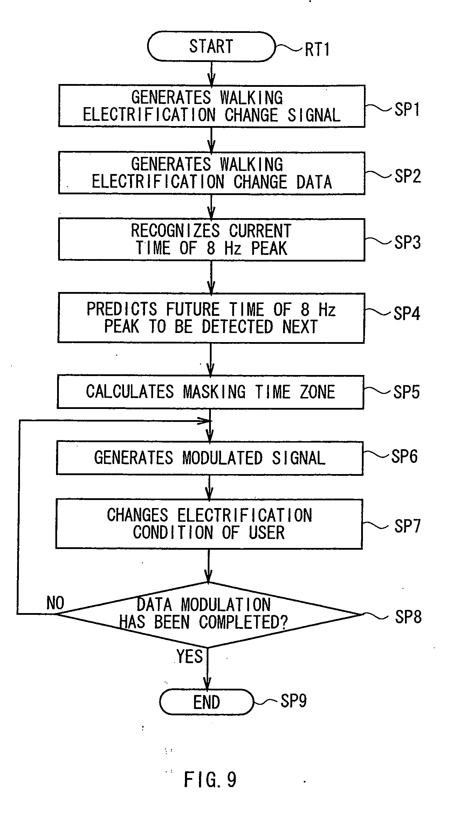

As shown in Figure 9, the sending portion 20 proceeds from the start step of a routine RT1 to the next step SP1, where it abstracts a low-frequency component of an amplified walking electrification change signal S1 supplied by the electric field detection portion 10 to generate a walking electrification change signal S2 and proceeds to the next step SP2.

At step SP2, the sending portion 20 performs analog-digital conversion based on the walking electrification change signal S2 to generate walking electrification change data D1, and proceeds to the next step SP3.

At step SP3, the sending portion 20 detects the 8 Hz peak Px (Figure 8(A)) based on the walking electrification change data D1 and, after recognizing the current time t(n) thereof, proceeds to the next step SP4.

At step SP4, the sending portion 20 predicts the future time t(n+1) of an 8 Hz peak Px which will be detected next to the 8 Hz peak Px detected at step SP3 from the above formula (13), and proceeds to the next step SP5.

At step SP5, the sending portion 20 determines the masking time zone MTZ from the start time ST(n) to the finish time FT(n) from the above formulas (14) and (15), based on the current time t(n) recognized at step SP3 and the future time t(n+1) predicted at step SP5, and proceeds to the next step SP6.

At step SP6, the sending portion 20 performs data modulation processing on the ID information D5 supplied from the memory in the card device 3 to generate a modulated signal HS, and then proceeds to the next step SP7.

At step SP7, by applying the modulated signal HS generated at step SP6 to the electrification induction electrode 31 to electrify the user, during the masking time zone MTZ calculated at step SP6, the sending portion 20 causes the user to act as an antenna and forms an information-transmission quasi-electrostatic field DSE (Figure 5) on which the ID information D5 is superimposed, isotropically around the surface of the user (Figure 8(C)), and then proceeds to step SP8.

In this case, the information-transmission quasi-electrostatic field DSE (Figure 5) formed isotropically around the surface of the user is acquired by the authentication device 2.

At step SP8, the sending portion 20 determines whether or not the data modulation processing has been completed at step SP6. If it has not been completed, the sending portion 20 returns to step SP6 and performs the data modulation processing again. On the contrary, if it has been completed, the sending portion 20 proceeds to the next step SP9 and ends the sending process.

As described above, in the sending portion 20, by changing the electrification condition of a user only during the masking time zone MTZ (Figure 8), in which the 8 Hz peak Px appears with the highest strength in the strength change in the walking quasi-electrostatic field HSE is avoided, it is possible to cause the user to act as an antenna and form an information-transmission quasi-electrostatic field DSE (Figure 5) in the neighborhood of the user while avoiding the modulated signal HS is destroyed by the 8 Hz peak Px.

(2-3) Configuration of an authentication device

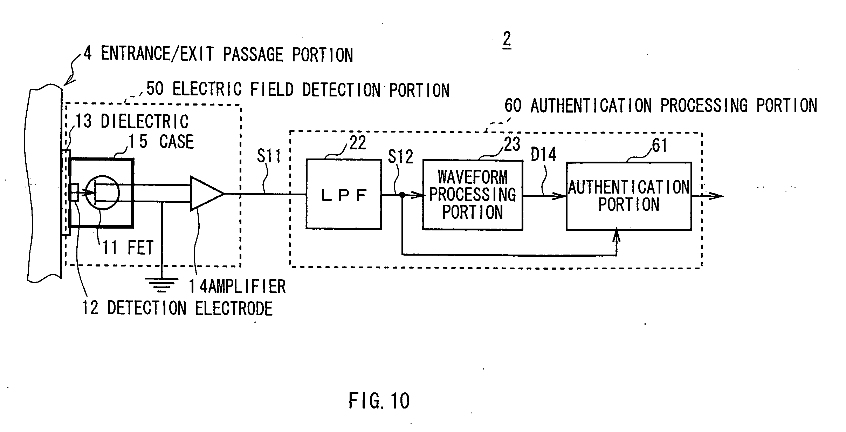

As shown in Figure 10, the authentication device 2 comprises an electric field detection portion 50 provided, for example, on the internal surface of the entrance/exit passage portion 4 at the entrance side thereof and having the same configuration of the electric field detection portion 10 (Figure 7), and an authentication processing portion 60 having the same configuration of the sending portion 20 except for a waveform processing portion 61 newly added instead of the modulation circuit 24 of the sending portion 20.

The authentication device 2 detects strength change in an information-transmission quasi-electrostatic field DSE (the walking quasi-electrostatic field HSE) formed in the neighborhood of a user coming near to the entrance/exit passage portion 4 to pass through it, via the electric field detection portion 50 and the amplifier 14 sequentially as an amplified walking electrification change signal S11, almost at the same time as the card device 3 does; abstracts only a low-frequency component with the LPF 22; and sends it as an electrification change signal S12 to the waveform processing portion 23 and the authentication portion 61.

In this case, the waveform processing portion 23 performs each of the processings similar to those described above with reference to Figure 9 based on the electrification change signal S12 at the same time the processes are performed by the card device 3, and after that, it determines the masking time zone MTZ corresponding to the same time zone of the card device 3, and then sends it to the authentication portion 61 as masking time data D14.

The authentication portion 61 performs a predetermined authentication process based on the masking time data D14 supplied by the waveform processing portion 23 and the electrification change signal S12 supplied by the LPF 22, using an ID list prestored in an internal memory (not shown).

In this case, the authentication portion 61 first performs demodulation processing on the electrification change signal S12 supplied by LPF 22 in accordance with a predetermined demodulation method only during the masking time zone MTZ in the masking time data D14, and abstracts the ID information D5 superimposed on the electrification change signal S12 (the information-transmission quasi-electrostatic field DSE).

The authentication portion 61 then checks the ID list stored in the internal memory against the ID information D5. Only when there is information corresponding to the ID information D5 in the ID list, it opens the exit door 5 of the entrance/exit passage portion 4.

An authentication processing portion 60 is actually adapted to perform the authentication process by the LPF 22, the waveform processing portion 23 and the authentication portion 61 as software, in accordance with a predetermined sending program, under the control of a control portion not shown. The procedure for the authentication process will be now described using the flowchart below.

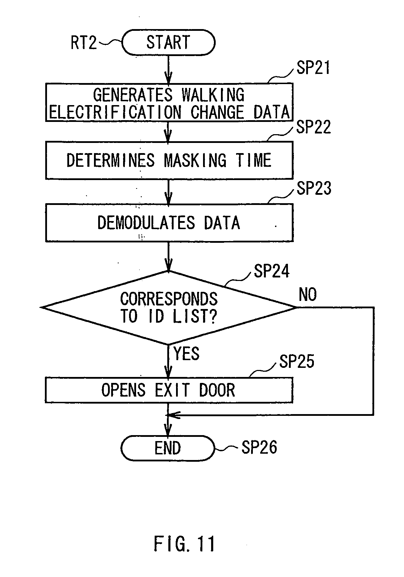

As shown in Figure 11, the authentication processing portion 60 proceeds from the start step of the routine RT2 to the next step SP21, and generates electrification change data by performing each of the same processings as performed at the steps SP1 and SP2 (Figure 9) by the card device 3 described above, on the amplified walking electrification change signal S11 detected and supplied by the electric field detection portion 50 at the same time when the card device 3 does, and then proceeds to the next step SP22.

At step SP22, the authentication processing portion 60 determines a masking time zone MTZ by performing each of the same processings at the above steps SP3 to SP5 for the card device 3, on the electrification change data generated at step SP21, and then proceeds to the next step SP23.

At step SP23, the authentication processing portion 60, by performing data demodulation processing on the electrification change data generated at step SP21 during the masking time zone MTZ determined at step SP22, abstracts the ID information D5 superimposed on the electrification change data, and then proceeds to the next step SP24.

At step SP24, the authentication processing portion 60 checks the ID information D5 abstracted at step SP23 against the ID list prestored in the internal memory, and determines whether or not there is information corresponding to the ID information D5 in the ID list.

If no such information exists, this indicates that the device is not the card device 3 supplied by the company but a fake device. In this case, the authentication processing portion 60 identifies that the user is not a person related to the company, and it proceeds to the next step SP25 and ends the authentication process.

On the contrary, if there is such information, this indicates that the device is the card device 3 supplied by the company. In this case, the authentication processing portion 60 proceeds to the next step SP25.

At step SP25, after opening the exit door 5 (Figure 5) of the entrance/exit passage portion 4, the authentication processing portion 60 proceeds to the next step SP26 and ends the authentication process.

Thus, the authentication processing portion 60 determines a masking time zone MTZ by performing the same processings as those by the card device 3 while detecting 8 Hz peaks Px that appear in almost the same cycle common to human bodies, irrespective of individuals, at the same time the card device 3 detects them, and thereby it can abstract ID information D5 superimposed on an information-transmission quasi-electrostatic field DSE formed in the neighborhood of a user by the card device 3, with high accuracy.

(2-4) Auxiliary means in near field communication

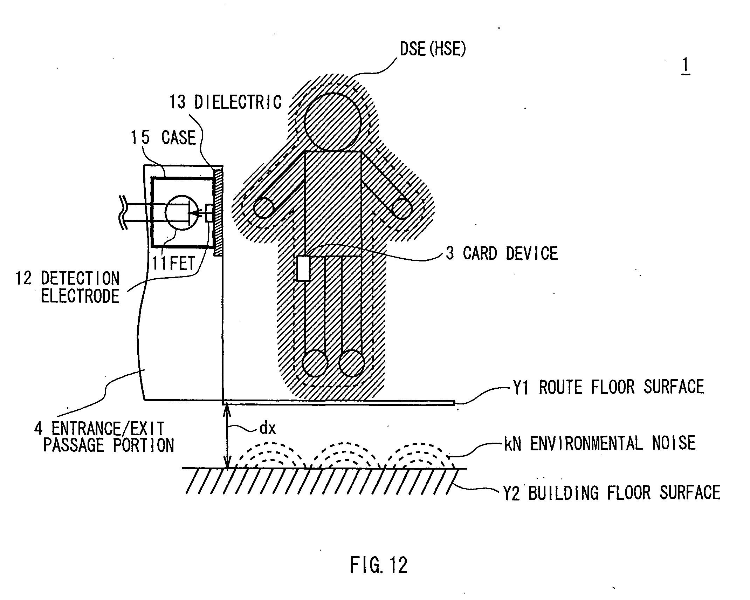

In addition to the above configuration, as shown in Figure 12, the authentication system 1 is provided with a floor surface (hereinafter referred to as a route floor surface) Y1 of the entrance/exit passage portion 4 in such a condition that it is not grounded to the ground (hereinafter referred to as a building floor surface) Y2 but is separated from the building floor surface Y2 by predetermined space dx (a gap).

In this case, the electrostatic capacity between the feet of the user and the building floor surface Y2 can be reduced to be less than the electrostatic capacity between the user and the side-surface electrode 7 by the amount corresponding to the space dx between the route floor surface Y1 and the building floor surface Y2, and thereby leakage of the information-transmission quasi-electrostatic field DSE (the walking quasi-electrostatic field HSE) from the feet to the building floor surface Y2 can be prevented.

In addition to this, it is also possible to prevent noises (hereinafter referred to as an environmental noises) KN caused by inconsistency of the building floor surface Y2, such as electrical discharge noises caused by electrically unstable condition due to a gap between joint surfaces of steel material in the building floor surface Y2 or rust of the steel material, from being induced from the route floor surface Y1 to the user.

Thus, in the communication system, it is possible to form, in a more stable condition, the equipotential surface of the information-transmission quasi-electrostatic field DSE (the walking quasi-electrostatic field HSE) which is formed substantially isotropically from around the surface of the user when the user is electrified and the electrification change momentarily conducts over the periphery of the surface of the user, and therefore it is possible to stable near field communication.

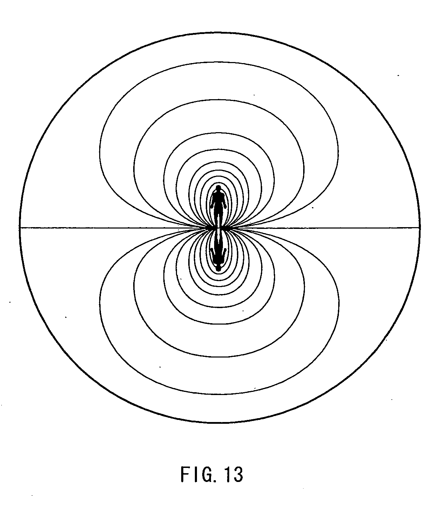

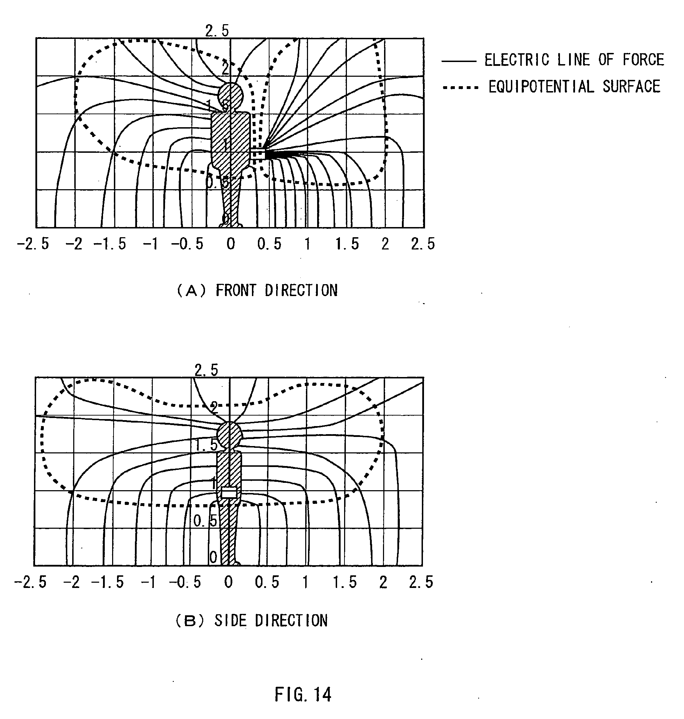

This will be visually apparent from comparison of Figure 13 showing the equipotential surface of a quasi-electrostatic field when a human body functions as an ideal dipole antenna and Figure 14 showing the results of experiments according to the present embodiment.

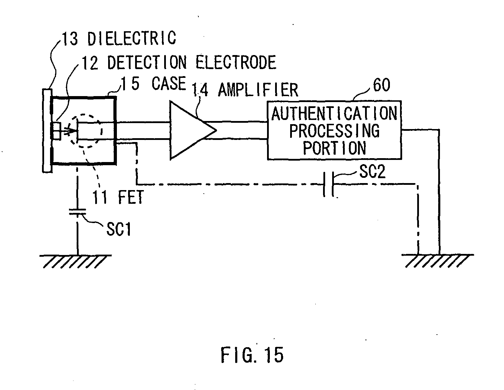

Furthermore, as shown in Figure 15, the authentication device 2 of the communication system 1 is adapted to prevent leakage of a signal on the route from the detection electrode 12 to the authentication processing portion 60 via the FET 11 and the amplifier 14. Specifically, first, a conductive case 15 is electrically separated from the FET 11; and second, only the authentication processing portion 60 is connected to the ground on the receiving route.

Third, as means for preventing such leakage, the authentication device 2 is adapted to reduce the electrostatic capacity SC1 between the FET 11 and the ground in comparison with the electrostatic capacity SC2 on the route from the FET 11 to the ground via the authentication processing portion 60, for example, by increasing the interval (height) between the FET 11 and the ground.

Thus, the authentication device 2 can efficiently induce the information-transmission quasi-electrostatic field DSE (the walking quasi-electrostatic field HSE) detected by the detection electrode 52 to the authentication processing portion 60 via the FET 11, and thereby receive the information-transmission quasi-electrostatic field DSE (Figure 5) formed around the user with high sensitivity.

(2-5) Operation and effect

In the communication system 1 with the above configuration, the card device 3 and the authentication device 2 detect almost at the same time amplitude peaks that appear, almost in a constant cycle because of walking characteristics, in the band at a frequency of 8±2 [Hz] in a walking quasi-electrostatic field HSE formed in the neighborhood of a human body in response to a walking motion of the human body passing through the entrance/exit passage portion 4 as a communication route.

Then, based on the detected amplitude peak, a masking time zone MTZ is determined; the user is electrified by the electrification induction portion 30 according to ID information D5 only during the masking time zone MTZ and thereby the electrification condition of the user is modulated; and the ID information D5 is abstracted by detecting the electrification condition of the user via the electric field detection portion 50 and then demodulating it by the authentication processing portion 60.

Accordingly, in the communication system 1, the ID information D5 can be sent and received in a condition that the ID information D5 superimposed on an information-transmission quasi-electrostatic field DSE can be prevented from being destroyed and in a condition that synchronization is almost sufficiently secured.

Furthermore, in the communication system 1, by removing a predicted peak decreasing period Δt1 and a predicted peak increasing period Δt2 preset in advance from the masking time zone MTZ, the information can be sent and received in a condition that synchronization is more sufficiently secured.

According to the above configuration, ID information D5 is sent and received by causing a human body to act as an antenna while avoiding 8 Hz peaks Px that appear with a high strength in the walking quasi-electrostatic field HSE formed in the neighborhood of the human body in response to a walking motion of the human body, so that the ID information D5 can be sent and received via the information-transmission quasi-electrostatic field DSE formed isotropically around the human body with the human body as an antenna while destruction of the information by the 8 Hz peak Px can be prevented. Thus, the degree of freedom in communication using a quasi-electrostatic field can be enhanced.

(3) Other embodiments

In the embodiment described above, description has been made on the case where the 8 Hz peak Px is detected by the peak detection portion 42 as peak detection means, from the strength displacement of the walking quasi-electrostatic field HSE formed around a human body in response to a walking motion of the human body. The present invention, however, is not limited thereto, and the peak of the electric field displacement may be detected which is generated around the human body by various other bipedal motions such as brisk walking, up-and-down movement on stairs and stepping movement on the same place, that is, such movements that include a state in which the entire plantar surface of one foot is in contact with the ground and the tiptoe of the other foot has just left the ground.

In this case, the amplitude peak in the walking waveform changes according to the speed of the movement performed from when the right foot (left foot) completely gets in contact with the ground until when the tiptoe of the right foot (left foot) has just left the ground. Therefore, by detecting the amplitude peak that appears at the frequency band according to the movement speed from when the right foot (left foot) in a bipedal motion to be detected is completely in contact with the ground until when the tiptoe of the right foot (left foot) has just left the ground as an index instead of the 8 Hz peak, the effect similar to that of the embodiment described above can be obtained.

In this case, the predicted peak decreasing period Δt1 and the predicted peak increasing period Δt2 are changed based on the frequency band according to the movement speed from when the right foot (left foot) in a bipedal motion to be detected is completely in contact with the ground until when the tiptoe of the right foot (left foot) has just left the ground, then near field communication can be performed in a more stable condition.

In the embodiment described above, description has been made on the case where the card device 3 as a sending device is positioned on a predetermined portion of a user's arm in contact therewith. The present invention, however, is not limited thereto, and the card device 3 may be positioned on various other portions of the epidermis of the user in contact therewith. For example, it may be embedded in a stud earring.

Furthermore, in the embodiment described above, description has been made on the case where the card device 3 is formed in a card shape. The present invention, however, is not limited thereto, and the card device 3 may be formed in various other shapes. After all any shape may be possible only if it is of a mobile type.

Furthermore, in the embodiment described above, description has been made on the case where the route floor surface Y1 is provided for the entrance/exit passage portion 4 in a condition that it is separated from the building floor surface Y2 (Figure 12) by predetermined space dx. The present invention, however, is not limited thereto, and a member with a low relative permittivity may be filled in the space dx.

In this case, if the relative permittivity of the member filled between the route floor surface Y1 and the building floor surface Y2 is represented by $\varepsilon$, the gap between the route floor surface Y1 and the building floor surface the building floor surface Y2 is represented by dx, the permittivity of vacuum electric constant is represented by $\varepsilon0$, and the area of the user's soles is represented by S, then the electrostatic capacity CY2 between the user's feet and the building floor surface Y2 approximates the relation represented by the following formula:

$$CY2 = \varepsilon_0 \cdot \varepsilon \, \frac{S}{dx} \tag{17}$$

Therefore, if the distance dx between the route floor surface Y1 and the building floor surface Y2 and the relative permittivity $\varepsilon$ of the member filled between the route floor surface Y1 and the building floor surface Y2 are selected in consideration of the above relation, the electrostatic capacity CY2 between the user's feet and the building floor surface Y2 can be certainly reduced to be less than the electrostatic capacity between the user and the side-surface electrode 7. Thus, leakage of the information-transmission quasi-electrostatic field DSE (the walking quasi-electrostatic field HSE) from the user's feet to the building floor surface Y2 can be prevented more securely, and thereby near field communication can be stabilized more securely.

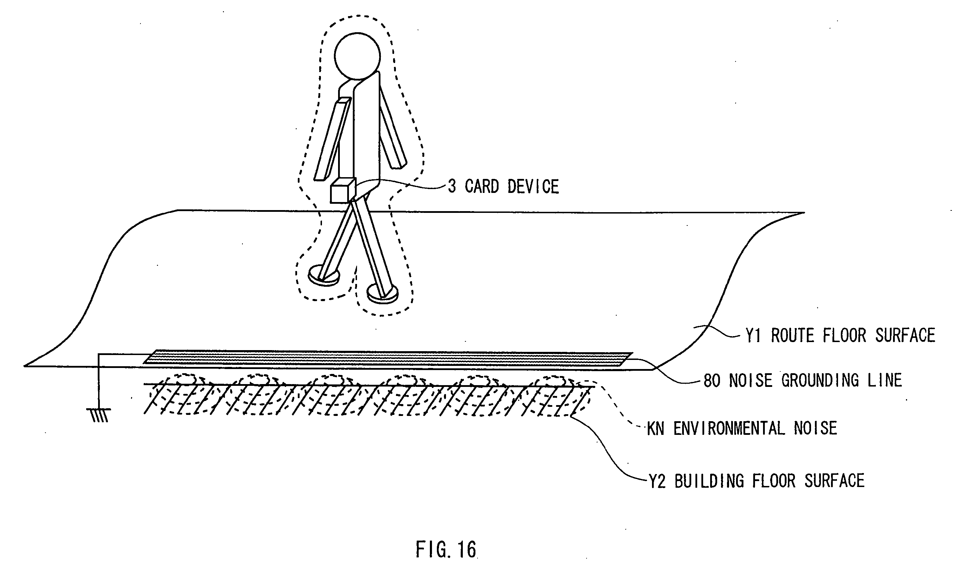

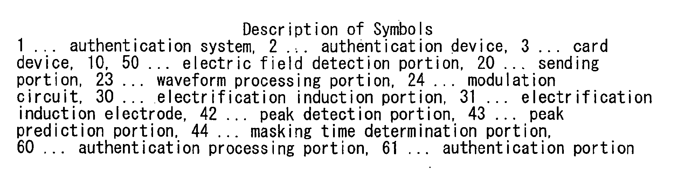

Furthermore, in the embodiment described above, description has been made on the case where the route floor surface Y1 is provided for the entrance/exit passage portion 4 in a condition that it is separated from the building floor surface Y2 (Figure 20) by predetermined space dx, as coupling preventing means for preventing a user and the ground from being electrically coupled with each other. The present invention, however, is not limited thereto, and there may be provided a noise absorption/grounding line 80 laid on the route floor surface Y1 and grounded to the building floor surface Y2, as shown in Figure 16.

In this case, it is possible to prevent such noises (hereinafter referred to as environmental noises) KN as are caused by inconsistency of the building floor surface Y2 from being induced from the route floor surface Y1 to the user and thereby stabilize the near field communication, similarly to the embodiment described above. Furthermore, if not only the space dx but also the noise absorption/grounding line 80 is provided between the route floor surface Y1 and the building floor surface Y2, stabilization of the near field communication can be enhanced more.

Furthermore, in the embodiment described above, description has been made on the case where electrification change of a user (the information-transmission quasi-electrostatic field DSE or the walking quasi-electrostatic field HSE) is detected by an FET 11 as detection means as the amplified walking electrification change signal S1 (S11). The present invention, however, is not limited thereto, and the change in the electrification condition of the user may be detected by various other detection means such as an induction-electrode-type field strength meter for measuring the voltage induced by induction voltage, an induction-electrode-type modulation-amplification-system field strength meter for AC converting a direct signal obtained by an induction electrode using a chopper circuit, oscillation capacity and the like, an electro-optic-effect-type field strength meter for applying en electric field to material having an electro-optic effect to measure change in the light propagation characteristics caused in the material, and, only for the card device 3, an electrometer, a shunt-resistor-type field strength meter, a current-collection-type field strength meter and the like.

Furthermore, in the embodiment described above, description has been made on the case where the modulation circuit 24 and the electrification induction portion 30 as modulation means generates a frequency f for a modulated signal HS to be supplied to the electrification-induction electrode 31 so that it satisfies the formula (16). According to the present invention, however, only if at least one of power and charge in the modulated signal HS to be supplied to the electrification-induction electrode 31 is limited, it will be sufficient.

Furthermore, in the embodiment described above, description has been made on the case where electrification induction means is realized by the modulation circuit 24 and the electrification induction portion 30. The present invention, however, is not limited thereto, and the electrification induction means may be realized by various other configurations.

Furthermore, in the embodiment described above, description has been made on the case where demodulation means is realized by the LPF 22 and the authentication portion 61. The present invention, however, is not limited thereto, and the demodulation means may be realized by various other configurations.

Furthermore, in the embodiment described above, description has been made on the case where the peak prediction portion 43 and the masking time determination portion 44 as communication frame determination means determine a masking time zone MTZ shorter than the time width between the 8 Hz peak Px appearing at the current time and the 8 Hz peak Px at the future time as a communication frame in accordance with the formulas (14) and (15). The present invention, however, is not limited thereto, and various other prediction formulas may be used to determine a communication frame.

Furthermore, in the embodiment described above, description has been made on the case where near field communication is performed via one user between the card device 3 as a first communication device provided in the neighborhood of the user and the authentication device 2 as a second communication device provided on a predetermined control target. The present invention, however, is not limited thereto, and near field communication may be performed via multiple users. In this case, the same effect as that of the embodiment described above can be obtained.

Furthermore, in the embodiment described above, description has been made on the case where the authentication device 2 is applied as a second communication device provided on a predetermined control target. The present invention, however, is not limited thereto, and a second communication provided on or in the neighborhood of a video tape recorder, a television set, electronics such as a mobile telephone or a personal computer, medical equipment, an automobile, a desk, and other control targets to be controlled, for example, can be broadly applied to the present invention. In this case, the same effect as that of the embodiment described above can be obtained.

Furthermore, in the embodiment described above, description has been made on the case where the present invention is applied to an authentication system 1 which opens an exit door 5 as necessary when a user enters or exits from an entrance/exit passage portion 4 as a communication route. The present invention, however, is not limited thereto and can be broadly applied to communication systems for various other purposes, such as a communication system with a communication route in the neighborhood of the desk, for opening the door of a desk as necessary when a user comes near to the desk, a communication system with a communication route in the neighborhood of a personal computer, for powering on the personal computer when a user comes near to the personal computer, and a communication system using a conveyance passage for conveying a predetermined identification target as a communication route, for switching conveyance passages as necessary when the identification target is conveyed to a predetermined position, that is, to any communication system that electrifies a human body according to information to cause the human body to act as an antenna and sends and receives information using a quasi-electrostatic field formed in the neighborhood of the human body as an information transmission medium.

Furthermore, in the embodiment described above, description has been made on the case where each of the processings by a sending portion 20 or an authentication processing portion 60 is realized by a program. The present invention, however, is not limited thereto, and a part or all of each processing may be realized by hardware means, such as an integrated circuit dedicated the processing.

Furthermore, in the embodiment described above, description has been made on the case where the sending process (Figure 9) or the authentication process (Figure 11) described above are performed in accordance with a program prestored in an internal memory. The present invention, however, is not limited thereto, and the sending process or the authentication process may be performed by mounting a program storage medium in which the program is stored into an information processor.

In this case, the program storage medium to have the program for executing the sending process or the authentication process installed and make it executable may be realized not only by a package media such as a flexible disk, a CD-ROM (Compact Disk-Read Only Memory), and a DVD (Digital Versatile Disc) but also by a semiconductor memory or a magnetic disk in which the program is temporarily or permanently stored. As means for storing an analysis program in such a program storage medium, a wired or wires communication medium, such as a local area network, the Internet, and digital satellite broadcasting, may be utilized, and the analysis program may be stored via various communication interfaces such as a router and a modem.

As described above, according to the present invention, in a communication system comprising a first communication device and a second communication device for sending and receiving information via a quasi-electrostatic field, the first and second communication devices detect an amplitude peak that appears at a predetermined frequency band in the displacement of a quasi-electrostatic field formed in the neighborhood of a human body in response to a bipedal motion of the human body passing through a predetermined communication route and determine a communication frame based on the detected amplitude peak. After that, the first communication device modulates the quasi-electrostatic field according to information only during the determined communication frame, while the second device demodulates the modulated quasi-electrostatic field only during the communication frame.

In this case, in the communication system, since the human body is electrified in a condition that amplitude peaks that appear with a high strength in the walking quasi-electrostatic field formed in the neighborhood of the human body in response to the human body's walking motion are avoided, it is possible to send and receive information by electrifying the human body according to predetermined information and thereby causing the human body to act as an antenna in the quasi-electrostatic field formed isotropically around the surface of the human body while preventing destruction of the information by such peaks. Thus the degree of freedom in communication using a quasi-electrostatic field can be enhanced.

Industrial Applicability

The present invention is adapted for the case of opening a door provided for a predetermined entrance/exit passage when the human body enters or exits from the entrance/exit passage, the case of unlocking a drawer provided for a desk as necessary when the human body comes near to the desk, and the case of switching conveyance passages as necessary when an article to be conveyed is conveyed to a predetermined conveyance passage.

**Claims**

1. A communication system comprising a first communication device and a second communication device for sending and receiving information via a quasi-electrostatic field,
   **characterized in that**:

   the first communication device comprises:

   peak detection means for detecting an amplitude peak that appears at a predetermined frequency band in the displacement of a quasi-electrostatic field formed in the neighborhood of the human body in response to a bipedal walking motion of the human body passing through a predetermined communication route; communication frame determination means for determining a communication frame based on the amplitude peak detected by the peak detection means; and
   modulation means for modulating the quasi-electrostatic field according to the information only during the communication frame determined by the communication determination means; and

   the second communication device comprises:

   the peak detection means;
   the communication frame determination means; and
   demodulation means for demodulating the modulated quasi-electrostatic field only during the communication frame.

2. The communication system according to claim 1, **characterized in that**:

   the communication frame determination means determines, together with a peak prediction means for predicting future appearance of the amplitude peak that appears next to the amplitude peak detected by the peak detection means, the communication frame with a shorter time width in comparison with the time width from the amplitude peak to the future amplitude peak.

3. The communication system according to claim 1, **characterized in that** the peak detection means detects the amplitude peak that appears at a frequency band of $8\pm2$ [Hz].

4. The communication system according to claim 1, **characterized in that**:

   the modulation means modulates the quasi-electrostatic field according to the information specific to the human body; and
   the second communication device comprises authentication means for performing authentication based on the information specific to the human body obtained as a result of demodulation by the demodulation means.

5. A communication system for sending and receiving information via a quasi-electrostatic field, **characterized in** comprising:

   a peak detection step of detecting an amplitude peak that appears at a predetermined frequency band in the displacement of a quasi-electrostatic field formed in the neighborhood of the human body in response to a bipedal walking motion of the human body passing through a predetermined communication route;
   a communication frame determination step of determining a communication frame based on the amplitude peak detected at the peak detection step; and
   a modulation/demodulation step of modulating the quasi-electrostatic field according to the information or demodulating the modulated quasi-electrostatic field only during the communication frame determined at the communication frame determination step.

6. A communication device for sending information via a quasi-electrostatic field, **characterized in** comprising:

peak detection means for detecting an amplitude peak that appears at a predetermined frequency band in the displacement of a quasi-electrostatic field formed in the neighborhood of the human body in response to a bipedal walking motion of the human body passing through a predetermined communication route; communication frame determination means for determining a communication frame based on the amplitude peak detected by the peak detection means; and modulation means for modulating the quasi-electrostatic field according to the information only during the communication frame determined by the communication determination means.

7. A communication device for sending information via a quasi-electrostatic field, **characterized in** comprising:

peak detection means for detecting an amplitude peak that appears at a predetermined frequency band in the displacement of a quasi-electrostatic field formed in the neighborhood of the human body in response to a bipedal walking motion of the human body passing through a predetermined communication route; communication frame determination means for determining a communication frame based on the amplitude peak detected by the peak detection means; and demodulation means for demodulating the modulated quasi-electrostatic field only during the communication frame.

**Amended claims under Art. 19.1 PCT**

5. (Amended) A communication method for sending and receiving information via a quasi-electrostatic field, **characterized in** comprising:

a peak detection step of detecting an amplitude peak that appears at a predetermined frequency band in the displacement of a quasi-electrostatic field formed in the neighborhood of the human body in response to a bipedal walking motion of the human body passing through a predetermined communication route; a communication frame determination step of determining a communication frame based on the amplitude peak detected at the peak detection step; and a modulation/demodulation step of modulating the quasi-electrostatic field according to the information or demodulating the modulated quasi-electrostatic field only during the communication frame determined at the communication frame determination step.

**Statement under Art. 19.1 PCT**

The claim 5 is amended, and claims 4 and 6 are retained unchanged.

FIG. 1

FIG. 2

FIG. 3

FIG. 4

EP 1 598 964 A1

HSE, DSE

2 AUTHENTICATION DEVICE

3 CARD DEVICE

4 ENTRANCE/EXIT PASSAGE PORTION

5 EXIT DOOR

1

FIG. 5

22

EP 1 598 964 A1

FIG. 6

FIG. 7

23

EP 1 598 964 A1

FIG. 8

24

START  ~RT1

GENERATES WALKING
ELECTRIFICATION CHANGE SIGNAL  ~SP1

GENERATES WALKING
ELECTRIFICATION CHANGE DATA  ~SP2

RECOGNIZES CURRENT
TIME OF 8 Hz PEAK  ~SP3

PREDICTS FUTURE TIME OF 8 Hz
PEAK TO BE DETECTED NEXT  ~SP4

CALCULATES MASKING TIME ZONE  ~SP5

GENERATES MODULATED SIGNAL  ~SP6

CHANGES ELECTRIFICATION
CONDITION OF USER  ~SP7

NO — DATA MODULATION
HAS BEEN COMPLETED?  ~SP8

YES

END  ~SP9

FIG. 9

EP 1 598 964 A1

4 ENTRANCE/EXIT PASSAGE PORTION

2

50 ELECTRIC FIELD DETECTION PORTION

60 AUTHENTICATION PROCESSING PORTION

13 DIELECTRIC
15 CASE

S11

22

S12

23

D14

61

L P F

WAVEFORM
PROCESSING
PORTION

AUTHENTICATION
PORTION

11 FET

14 AMPLIFIER

12 DETECTION ELECTRODE

FIG. 10

EP 1 598 964 A1

RT2 ( START )

GENERATES WALKING
ELECTRIFICATION CHANGE DATA — SP21

DETERMINES MASKING TIME — SP22

DEMODULATES DATA — SP23

CORRESPONDS
TO ID LIST? — SP24 — NO

YES

OPENS EXIT DOOR — SP25

END — SP26

FIG. 11

27

FIG. 12

EP 1 598 964 A1

FIG. 13

(A) FRONT DIRECTION

(B) SIDE DIRECTION

FIG. 14

FIG. 15

3 CARD DEVICE

Y1 ROUTE FLOOR SURFACE

80 NOISE GROUNDING LINE

KN ENVIRONMENTAL NOISE

Y2 BUILDING FLOOR SURFACE

FIG. 16

EP 1 598 964 A1

Description of Symbols
1 ... authentication system, 2 ... authentication device, 3 ... card device, 10, 50 ... electric field detection portion, 20 ... sending portion, 23 ... waveform processing portion, 24 ... modulation circuit, 30 ... electrification induction portion, 31 ... electrification induction electrode, 42 ... peak detection portion, 43 ... peak prediction portion, 44 ... masking time determination portion, 60 ... authentication processing portion, 61 ... authentication portion

**INTERNATIONAL SEARCH REPORT**

| International application No. |
| --- |
| PCT/JP2004/002374 |

A. CLASSIFICATION OF SUBJECT MATTER
  Int.Cl⁷ H04B13/00, H04B5/02

According to International Patent Classification (IPC) or to both national classification and IPC

B. FIELDS SEARCHED

Minimum documentation searched (classification system followed by classification symbols)
  Int.Cl⁷ H04B13/00, H04B5/02

Documentation searched other than minimum documentation to the extent that such documents are included in the fields searched
  Jitsuyo Shinan Koho         1922-1996   Toroku Jitsuyo Shinan Koho   1994-2004
  Kokai Jitsuyo Shinan Koho   1971-2004   Jitsuyo Shinan Toroku Koho   1996-2004

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | JP 11-509380 A (Massachusetts Institute of Technology), 17 August, 1999 (17.08.99), Page 10, lines 22 to 26 & WO 96036134 A1          & EP 824799 A & US 5914701 A1          & CA 2220294 A & AU 5671396 A          & BR 9608465 A & ES 2180767 T          & DE 69623115 T | 1-7 |
| A | JP 10-229357 A (Nippon Telegraph And Telephone Corp.), 25 August, 1998 (25.08.98), Claim 1 & US 6223018 B1 | 1-7 |

| ☒ Further documents are listed in the continuation of Box C. | ☐ See patent family annex. |
| --- | --- |

\*   Special categories of cited documents:
"A"   document defining the general state of the art which is not considered to be of particular relevance
"E"   earlier application or patent but published on or after the international filing date
"L"   document which may throw doubts on priority claim(s) or which is cited to establish the publication date of another citation or other special reason (as specified)
"O"   document referring to an oral disclosure, use, exhibition or other means
"P"   document published prior to the international filing date but later than the priority date claimed

"T"   later document published after the international filing date or priority date and not in conflict with the application but cited to understand the principle or theory underlying the invention
"X"   document of particular relevance; the claimed invention cannot be considered novel or cannot be considered to involve an inventive step when the document is taken alone
"Y"   document of particular relevance; the claimed invention cannot be considered to involve an inventive step when the document is combined with one or more other such documents, such combination being obvious to a person skilled in the art
"&"   document member of the same patent family

| Date of the actual completion of the international search | Date of mailing of the international search report |
| --- | --- |
| 01 June, 2004 (01.06.04) | 15 June, 2004 (15.06.04) |

| Name and mailing address of the ISA/ | Authorized officer |
| --- | --- |
| Japanese Patent Office | |
| Facsimile No. | Telephone No. |

Form PCT/ISA/210 (second sheet) (January 2004)

**EP 1 598 964 A1**

<table>
<tr><td colspan="2" style="text-align:center"><b>INTERNATIONAL SEARCH REPORT</b></td><td>International application No.<br>PCT/JP2004/002374</td></tr>
</table>

C (Continuation). DOCUMENTS CONSIDERED TO BE RELEVANT

| Category* | Citation of document, with indication, where appropriate, of the relevant passages | Relevant to claim No. |
|---|---|---|
| A | JP 7-170215 A (Sony Corp.),<br>04 July, 1995 (04.07.95),<br>Par. No. [0035]<br>(Family: none) | 1-7 |

Form PCT/ISA/210 (continuation of second sheet) (January 2004)